# EUROPÄISCHE PATENTSCHRIFT

(11) **EP 1 226 688 B1**
(45) Veröffentlichungstag und Bekanntmachung des Hinweises auf die Patenterteilung: **21.11.2007**
(21) Anmeldenummer: 00977468.8
(22) Anmeldetag: 02.11.2000
(51) Int. Cl.: H04L 12/56, H04Q 3/66

(54) **VERFAHREN ZUR LEBENSZEITBEGRENZUNG VON DATAGRAMMEN IN PAKETVERMITTELNDEN NETZEN**
METHOD FOR LIMITING THE LIFETIME OF DATAGRAMS IN PACKET-SWITCHED NETWORKS
PROCEDE POUR LIMITER LA DUREE DE VIE DE DATAGRAMMES DANS DES RESEAUX A COMMUTATION PAR PAQUETS

(30) Priorität: 04.11.1999 EP 99121864
(43) Veröffentlichungstag der Anmeldung: 31.07.2002
(73) Patentinhaber: NOKIA SIEMENS NETWORKS GMBH & CO. KG, 81541 München (DE)
(72) Erfinder: GRADISCHNIG, Klaus, David, Reston, VA 20194-1977 (US)
(86) Internationale Anmeldenummer: PCT/EP2000/010816
(87) Internationale Veröffentlichungsnummer: WO 2001/033777

(56) Entgegenhaltungen:
- US-A- 5 889 847
- PERLMAN R: "AN ALGORITHM FOR DISTRIBUTED COMPUTATION OF A SPANNING TREE IN AN EXTENDED LAN" PROCEEDINGS OF THE DATA COMMUNICATIONS SYMPOSIUM,US,WASHINGTON, IEEE COMPUTER SOCIETY PRESS, Bd. SYMP. 9, 1985, Seiten 44-53, XP000619290

## Beschreibung

In Datenkommunikationsnetzen, beispielsweise dem Internet, in denen der Weg von Nachrichten durch das Netz nicht durch eine einzige Instanz, beispielsweise die Nachrichtenquelle, vorgegeben wird, sondern die Nachrichtenlenkung autonom in den einzelnen Netzknoten anhand der im Header des Datenpakets angegebenen Zieladresse durchgeführt wird, kann es aufgrund von inkonsistenten Routing-Tabellen, die in den einzelnen Routern vorliegen, vorkommen, daß Nachrichten einen zu langen Weg einschlagen oder sogar Endlos-Schleifen durchlaufen.

Im Internet-Protokoll TCP/IP gibt es die Option des Rout-Recording, bei dem das Empfangsprimitive der Nachricht immer eine Liste der Router enthält, die auf dem Weg zwischen Sender und Empfänger lagen. Damit ist es im Prinzip möglich, die Zahl der durchlaufenen Router festzustellen. Ebenfalls können durch das Aufzeichnen der durchlaufenden Router in den Nachrichten Endlos-Schleifen festgestellt werden. Durch diese Option werden aber sehr viele Felder reserviert, so daß diese Methode auch im Internet nicht immer angewendet werden kann, und insbesondere in anderen Datennetzen mit anderen Netzübertragungsprotokollen nicht verwendet werden kann.

Die Möglichkeit, das Umherirren von Datenpaketen auf zu langen Wegen oder in Endlos-Schleifen kann nach der Methode des Hop-Count-Wertes gelöst werden. Der Hop-Count ist eine Maßeinheit für die Entfernung von zwei Datenstationen im Netz. Ein Hop-Count von n bedeutet, daß zwischen Quelldatenstation und Zieldatenstation n Transferknoten oder Gateways liegen. Der Hop-Count-Wert dient im Internet-Protokoll dazu, Datagramme mit fehlerhaften Empfängeradressen nicht endlos im Netz umherirren zu lassen, was zusätzliches Datenaufkommen schafft. So ist beispielsweise im IPv6-Protokoll ein Hop-Limit-Feld von 8 Bit Länge vorgesehen.

Eine weitere, bekannte Methode zur Überwachung des Netzes auf das Auftreten von Schleifen liegt darin, die einzelnen Wege auf Überlast zu überwachen. Tritt Überlast auf, besteht die Möglichkeit einer Schleife, und es werden dann spezifische Tests durchgeführt, beispielsweise durch Versenden von Testnachrichten, welche auf dem Weg mit der vermuteten Schleife ausgesendet und auf Ihre Rückkehr überwacht werden. Hiermit ist zwar das Entdecken von Schleifen möglich, es ist aber nicht möglich, unökonomische, zu lange Wege im Netz zu erkennen.

Bei Netzwerken mit administrativ vorgegebenen und nach Priorität geordneten Wegen (Primär- und Sekundärwegen) wird mit Hilfe eines zusätzlichen Protokolls ein Auditprozeß über das Netz verteilt durchgeführt, der alle im Netz möglichen Wege auf Maximallänge und Schleifenfreiheit überprüft. Dieser Auditprozeß muß aber in allen Netzknoten zur Verfügung stehen. Die Prozesse hierfür sind auch sehr aufwendig.

Bei einer weiteren Methode geht man von der Annahme aus, daß ein Weg, der nur oder größtenteils aus hoch prioren Abschnitten besteht, eher schleifenfrei ist als ein Weg, der mehrere oder auch viele niedrig priore Abschnitte enthält. Datenverkehr, der seinen Ursprung nicht im eigenen Knoten des Netzes hat, darf niedriger priore Wege nur eingeschränkt benutzen. Ein Nachteil dieser Methode liegt darin, daß nur eine sehr begrenzte Geschichte des Nachrichtenverlaufs zur Verfügung steht und damit oft unnötig Einschränkungen gemacht werden müssen.

Der Erfindung liegt die Aufgabe zugrunde, bei paketvermittelten Datennetzen mit Protokollen, die keinen ausreichenden Raum für ein Hop-Limit-Feld besitzen, Maßnahmen anzugeben, mit denen zu lange Wege oder Schleifen für die Datagramme im Netz erkannt werden können.

Diese Aufgabe wird mit dem im Patentanspruch 1 angegebenen Verfahren und der im Patentanspruch 6 angegebenen Vorrichtung gelöst. Vorteilhafte Ausgestaltungen der Erfindung sind in den Unteransprüchen angegeben.

Gemäß der Erfindung wird ebenfalls ein Hop-Count Datenfeld (im Folgenden auch als HC-Feld bezeichnet) für die Lebenszeitbegrenzung des Datagramms vorgesehen, wobei dieses Feld jedoch nicht die üblicherweise vorgesehene Länge von 8 Bit besitzen muß, sondern wesentlich kürzer, beispielsweise nur 2 Bit lang sein kann. Bei der oben beschriebenen Hop-Count-Methode würde ein Hop-Limit-Feld von nur 2 Bit Länge dazu führen, daß ein Datagramm, wenn es drei Netzknoten durchlaufen hat und beim vierten erscheint, dort verworfen würde, da dann die 2 Bit nach unten bzw. nach oben gezählt worden wären. Gemäß der Erfindung wird dieser Nachteil umgangen, indem das HC-Feld nicht bei jedem Durchlaufen eines Transferknotens (Router, Gateway) verändert wird, sondern nur bei Vorliegen weiterer Bedingungen. Als eine solche Bedingung wird vorteilhafterweise die Priorität des von dem Router ausgesuchten Weges verwendet. Wählt der Router eine hoch priore Route, so wird er das HC-Feld nicht, bei niedrig prioren Routen jedoch um 1 und bei sehr niedrig prioren Routen um 2 verändern. Es wird wie bei der oben bereits geschilderten Methode davon ausgegangen, daß hoch priore Routen eher schleifenfrei sind als solche, die niedrigere Priorität besitzen.

Die Bedingung für die Veränderung des HC-Feldes kann alternativ auch in Abhängigkeit von der Struktur des Netzwerkes gewählt werden. So ist es möglich, daß das HC-Feld nur von besonders wichtigen, zentralen Knoten verändert werden kann. Als weitere Bedingung dient hier also die Position des jeweiligen Routers im Netz. Dies ist insbesondere dann von Interesse, wenn man nur wenige Router mit dieser Methode ausstatten möchte.

Das erfindungsgemäße Verfahren wird mit Vorteil bei Netzen angewendet, die mit dem Zeichengabesystem Nr. 7 (SS7) arbeiten.

Vorzugsweise wird in einem Transferknoten der Wert des HC-Feldes bei Vorliegen der Bedingungen vor dem Weiterleiten erhöht. Dies hat den Vorteil, daß bei einer Einfügung des erfindungsgemäßen Verfahrens in Netzen nicht sämtliche im Netz befindlichen Endknoten auf die neue Methode angepaßt werden müssen, sondern daß dies unterbleiben kann. Normalerweise werden in einem Netz nicht verwendete Felder in einer Nachricht auf Null gesetzt. Daher werden Endknoten, die nicht entsprechend angepaßt sind, das HC-Feld auf Null setzen. Würde diese Nachricht dann an einen Transferknoten gelangen, bei dem das erfindungsgemäße Verfahren mit Erhöhung des HC-Feldes implementiert ist, so entnimmt dieser aus dem Wert Null, daß die Nachricht einen zu langen Weg durchlaufen hat und verwirft sie. Dieses Problem tritt nicht auf, wenn der Wert des HC-Feldes in Abhängigkeit von dem Vorliegen der Bedingungen erhöht wird, und die Nachricht bei Überschreiten des Maximalwertes verworfen wird und Alarmierungsfunktionen eingeleitet werden.

Im Folgenden wird die Erfindung anhand eines Ausführungsbeispieles beschrieben und näher erläutert:
Fig. 1 zeigt das Nachrichtenformat der MTP-Ebene 3,
Fig. 2 zeigt schematisch ein Netz, in dem die Erfindung eingesetzt wird.

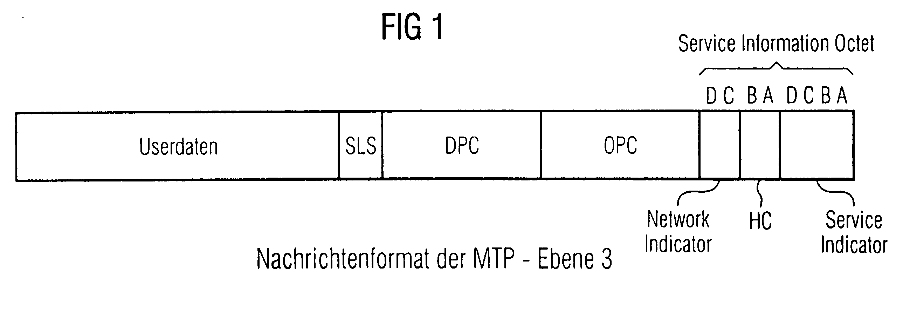

Fig. 1 zeigt das Nachrichtenformat der MTP-Schicht 3 nach dem ITU-Standard (International Telecommunication Union). Es umfaßt die Nutzdaten (Userdaten), das Signalling Link Selection (SLS)-Feld, die Zieladresse DPC (Destination Point Code), die Absenderadresse OPC (Origination Point Code), sowie ein Service Information Octet, welches einen Service Indicator von 4 Bit umfaßt, ein weiteres Feld von 2 Bit als Network Indicator und ein ansonsten ungenutztes Feld von 2 Bit. Dieses Feld wird von dem erfindungsgemäßen Verfahren als HC-Feld ausgenutzt.

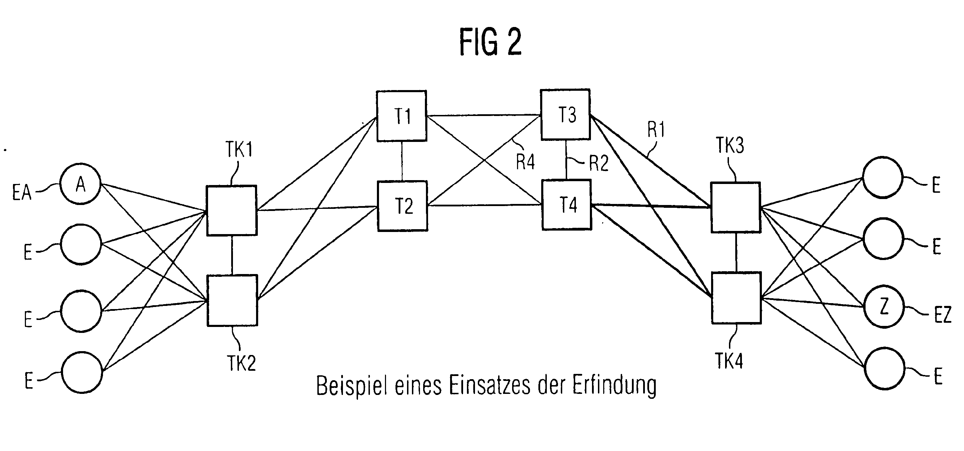

Die Fig. 2 zeigt schematisch ein Netz, bei dem die Erfindung eingesetzt wird. Das Netz besteht aus Endknoten E, Transferknoten TK1, TK2, TK3, TK4, bei denen das erfindungsgemäße Schleifenerkennungsverfahren nicht eingesetzt wird, sowie Transferknoten T1, T2, T3, T4, bei denen die Erfindung implementiert ist. Es wird dabei davon ausgegangen, daß die Transferknoten T1 bis T4 Datenverkehr nie über denselben Link bzw. Linkset senden, über den er empfangen wurde. Sendet ein Transferknoten, z. B. der Knoten T3, die Nachricht auf eine Route R1 mit der höchsten Priorität, so ändert er den Wert dieses Feldes nicht. Sendet er dagegen die Nachricht auf eine Route R2 mit niedriger Priorität, so erhöht er den Wert um 1, und wählt er eine der niedrigst prioren Routen R4 aus, so erhöht er den Wert um 2. Steht der Wert des HC-Feldes auf 2, so kann ein nachfolgender Transferknoten T4, bei dem das Verfahren implementiert ist, die Nachricht noch einmal über eine Route R2 mit niedrigerer Priorität senden. Soll sie im weiteren Verlauf nochmals über eine Route mit niedriger Priorität gesendet werden, erreicht der Wert des HC-Feldes das Maximum und die Nachricht wird dann verworfen.

## Patentansprüche

1. Verfahren zur Lebenszeitbegrenzung von Datagrammen in paketvermittelten Netzen, bei denen die Datagramme jeweils ein ihre Lebensdauer angebendes Hop-Count-Datenfeld, HC-Datenfeld, enthalten, und bei dem Transferknoten, die das Datagramm bei seinem Weg durch das Netz durchläuft, dieses HC-Datenfeld vor dem Weiterleiten verändern können,
**dadurch gekennzeichnet,**
**daß** das HC-Datenfeld nicht bei jedem Durchlaufen eines Transferknotens verändert wird, sondern nur bei Vorliegen weiterer Bedingungen.

2. Verfahren nach Anspruch 1,
**dadurch gekennzeichnet,**
**daß** das HC-Datenfeld in Abhängigkeit von der Priorität des vom Transferknoten gewählten Weges verändert wird.

3. Verfahren nach Anspruch 1 oder 2,
**dadurch gekennzeichnet,**
**daß** das HC-Datenfeld in Abhängigkeit von Eigenschaften des Transferknotens verändert wird.

4. Verfahren nach einem der Ansprüche 1 bis 3,
**dadurch gekennzeichnet,**
**daß** das HC-Datenfeld von dem den Ursprung der Nachricht darstellenden Knoten auf Null gesetzt wird, und daß das HC-Datenfeld bei Veränderung erhöht wird.

5. Anwendung des Verfahrens nach einem der Ansprüche 1 bis 4 in nach dem Zeichengabesystem Nr. 7 ausgebildeten paketvermittelnden Netzen.

6. Vorrichtung zur Lebenszeitbegrenzung von Datagrammen in paketvermittelten Netzen, bei denen die Datagramme jeweils ein ihre Lebensdauer angebendes Hop-Count-Datenfeld, HC-Datenfeld, enthalten, und bei dem Transferknoten, die das Datagramm bei seinem Weg durch das Netz durchläuft, dieses HC-Datenfeld vor dem Weiterleiten verändern können,
**gekennzeichnet durch**
Mittel zum Verändern des HC-Datenfeldes, die das HC-Feld nicht bei jedem Durchlaufen eines Transferknotens verändern, sondern nur bei Vorliegen von weiteren Bedingungen.

7. Vorrichtung nach Anspruch 6,
**gekennzeichnet durch**
Mittel zum Verändern des HC-Datenfeldes in Abhängigkeit von der Priorität des vom Transferknoten gewählten Weges.

8. Vorrichtung nach Anspruch 6 oder 7,
**gekennzeichnet durch**
Mittel zum Verändern des HC-Datenfeldes in Abhängigkeit von Eigenschaften des Transferknotens.

9. Vorrichtung nach einem der Ansprüche 6 bis 8,
**gekennzeichnet durch**
Mittel zum Setzen des Wertes des HC-Datenfeldes auf Null.

10. Vorrichtung nach Anspruch 8,
**dadurch gekennzeichnet,**
**daß** die Mittel zum Verändern des HC-Datenfeldes derart ausgelegt sind, daß sie dessen Wert bei Veränderung erhöhen.

## Claims

1. Method for limiting the lifetime of datagrams in packet-switched networks in which each datagram contains a hop count data field, HC data field, indicating its lifetime, and in which transfer nodes through which the datagram passes on its route through the network can change this HC data field before forwarding,
**characterised in that**
the HC data field is not changed every time it passes a transfer node, but only when other conditions exist.

2. Method according to claim 1,
**characterised in that**
the HC data field is changed according to the priority of the path selected by the transfer node.

3. Method according to claim 1 or 2,
**characterised in that**
the HC data field is changed according to properties of the transfer node.

4. Method according to claims 1 to 3,
**characterised in that**
the HC data field of the node representing the origin of the message is set to zero, and the HC data field is increased in the event of change.

5. Application of the method according to one of claims 1 to 4 in packet-switched networks designed according to signalling system no. 7.

6. Device for limiting the lifetime of datagrams in packet-switched networks in which each datagram contains a hop count data field, HC data field, indicating its lifetime, and in which transfer nodes through which the datagram passes on its route through the network can change this HC data field before forwarding,
**characterised by**
means for changing the HC data field which do not change the HC field every time it passes a transfer node, but only when other conditions exist.

7. Device according to claim 6,
**characterised by**
means for changing the HC data field according to the priority of the route selected by the transfer node.

8. Device according to claim 6 or 7,
**characterised by**
means for changing the HC data field according to properties of the transfer node.

9. Device according to one of claims 6 to 8,
**characterised by**
means for setting the value of the HC data field to zero.

10. Device according to claim 8,
**characterised in that**
the means for changing the HC data field are designed such that they increase its value when the change is made.

## Revendications

1. Procédé pour limiter la durée de vie de datagrammes dans des réseaux à commutation par paquets dans lesquels les datagrammes contiennent à chaque fois un champ de données Hop-Count, champ de données HC, indiquant leur durée de vie, et dans lequel des noeuds de transfert que le datagramme traverse sur son chemin à travers le réseau peuvent modifier ce champ de données HC avant la transmission, **caractérisé en ce que** le champ de données HC n'est pas modifié à chaque fois qu'il traverse un noeud de transfert mais seulement en présence d'autres conditions.

2. Procédé selon la revendication 1, **caractérisé en ce que** le champ de données HC est modifié en fonction de la priorité du chemin sélectionné par le noeud de transfert.

3. Procédé selon la revendication 1 ou 2, **caractérisé en ce que** le champ de données HC est modifié en fonction de propriétés du noeud de transfert.

4. Procédé selon l'une des revendications 1 à 3, **caractérisé en ce que** le champ de données HC est fixé égal à zéro par le noeud représentant l'origine du message et **en ce que** le champ de données HC est augmenté lors de la modification.

5. Utilisation du procédé selon l'une des revendications 1 à 4 dans des réseaux à commutation par paquets exécutés selon le système de signalisation n° 7.

6. Dispositif pour limiter la durée de vie de datagrammes dans des réseaux à commutation par paquets dans lesquels les datagrammes contiennent à chaque fois un champ de données Hop-Count, champ de données HC, indiquant leur durée de vie, et dans lequel des noeuds de transfert que le datagramme traverse sur son chemin à travers le réseau peuvent modifier ce champ de données HC avant la transmission, **caractérisé par** des moyens pour modifier le champ de données HC qui ne modifient pas le champ HC à chaque fois qu'il traverse un noeud de transfert mais seulement en présence d'autres conditions.

7. Dispositif selon la revendication 6, **caractérisé par** des moyens pour modifier le champ de données HC en fonction de la priorité du chemin sélectionné par le noeud de transfert.

8. Dispositif selon la revendication 6 ou 7, **caractérisé par** des moyens pour modifier le champ de données HC en fonction de propriétés du noeud de transfert.

9. Dispositif selon l'une des revendications 6 à 8, **caractérisé par** des moyens pour fixer la valeur du champ de données HC à zéro.

10. Dispositif selon la revendication 8, **caractérisé en ce que** les moyens pour modifier le champ de données HC sont étudiés de manière à augmenter la valeur de ce dernier lors de la modification.
